# EUROPÄISCHE PATENTSCHRIFT

(11) **EP 3 139 052 B1**
(45) Veröffentlichungstag und Bekanntmachung des Hinweises auf die Patenterteilung: **26.12.2018**
(21) Anmeldenummer: 15183334.0
(22) Anmeldetag: 01.09.2015
(51) Int. Cl.: F16D 7/04, B60R 1/074

(54) **RUTSCHKUPPLUNG FÜR EINE VERSTELLVORRICHTUNG UND AUSSENSPIEGEL FÜR EIN KRAFTFAHRZEUG MIT EINER VERSTELLVORRICHTUNG**
FRICTION CLUTCH FOR AN ADJUSTMENT DEVICE AND EXTERNAL REARVIEW MIRROR FOR A MOTOR VEHICLE WITH AN ADJUSTING DEVICE
ACCOUPLEMENT À FRICTION POUR DISPOSITIF DE RÉGLAGE ET RÉTROVISEUR EXTÉRIEUR POUR UN VÉHICULE AUTOMOBILE DOTÉ D'UN TEL DISPOSITIF DE RÉGLAGE

(43) Veröffentlichungstag der Anmeldung: 08.03.2017
(73) Patentinhaber: SMR Patents S.à.r.l., 2453 Luxembourg (LU)
(72) Erfinder: Herrmann, Andreas, 71364 Winnenden-Baach (DE); Rudi, Artem, 71634 Ludwigsburg (DE); Hein, Peter, 73770 Denkendorf (DE)
(74) Vertreter: Weber-Bruls, Dorothée

(56) Entgegenhaltungen:
- DE-A1-102011 109 375
- DE-A1-102012 001 891
- GB-A- 661 643
- GB-A- 2 022 199
- US-A- 3 618 310
- US-A- 4 982 926
- US-A- 5 000 721
- US-A- 5 601 491
- US-A1- 2008 188 315

## Beschreibung

Die vorliegende Erfindung betrifft eine Rutschkupplung für eine Verstellvorrichtung eines Kraftfahrzeugaußenspiegels, umfassend zwei Kunststoffteile, von denen ein erstes Teil als ein äußeres Zahnrad mit einer ersten Vielzahl von ersten Kupplungselementen und das zweite Teil als eine innere Welle mit einer zweiten Vielzahl von zweiten Kupplungselementen ausgeformt ist, wobei die ersten Kupplungselemente als Kupplungsnasen und die zweiten Kupplungselemente als Kupplungslippen ausgebildet sind, oder die zweiten Kupplungselemente als Kupplungsnasen und die ersten Kupplungselemente als Kupplungslippen ausgebildet sind, wobei die beiden Kunststoffteile bis zu einem vorgegebenen maximalen Drehmoment miteinander drehen, und wobei zwischen den ersten und zweiten Kupplungselementen bis zu dem vorgegebenen maximalen Drehmomenten ein Formschluss besteht.

Solch eine Rutschkupplung ist aus der DE 10 2005 012 652 A1 bekannt und zeichnet sich dadurch aus, dass die beiden Kunststoffteile mit planaren Flächen derart aneinander anliegen, dass sie bis zu dem vorgegebenen maximalen Drehmoment alleine aufgrund von Haftreibung miteinander in Eingriff stehen.

Rutschkupplungen sind auch weiterhin aus der US 5,000,721 A, der US 2008/188315 A1, der US 3 618 310 A, der US 4 982 926 A, DE 10 2011 109375 A1, GB 2 022 199 A, GB 661 643 A, DE 10 2012 001891 A1, und US 5 601 491 A bekannt.

Verstellvorrichtungen für klappbare Kraftfahrzeugaußenspiegel sind im Stand der Technik vielfältig bekannt, siehe z.B. die EP 2 159 102 A1 oder EP 2 230 131 A1.

Aufgabe der vorliegenden Erfindung ist es, die gattungsgemäße Rutschkupplung derart weiterzuentwickeln, dass nicht nur ein einfacher Aufbau vorliegt, sondern die Einstellung des vorgegebenen maximalen Drehmomenten auch einfach veränderbar bzw. einstellbar ist.

Diese Aufgabe wird erfindungsgemäß dadurch gelöst, dass das Kunststoffteil mit den Kupplungslippen aus einem Kunststoff mit höherer Elastizität als das Kunststoffteil mit den Kupplungsnasen hergestellt ist.

Dabei wird vorgeschlagen, dass 4 - 50 erste und/oder zweite Kupplungselemente vorgesehen sind. Jede Kupplungslippe kann formschlüssig zwischen zwei benachbarten Kupplungsnasen angeordnet werden, und/oder jede Kupplungslippe kann an einem freien Ende eines Biege- oder Federbereichs ausgeformt sein.

Bevorzugt ist, dass jede Kupplungsnase im Querschnitt die Form eines gleichschenkligen Trapezes einer Höhe h und eines Winkels β von weniger als 90 ° an seinem freien Ende aufweist. Zudem kann vorgesehen sein, dass die beiden Kunststoffteile entweder in einem Werkzeug, vorzugsweise in einem 2-K-Spritzgussprozess, hergestellt sind, oder die Welle in das Zahnrad eingebaut ist.

Erfindungsgemäße Rutschkupplungen sind zudem dadurch gekennzeichnet, dass das maximale Drehmoment bestimmt ist durch die Geometrie der Kupplungslippen und/oder der Kupplungsnasen, insbesondere die Höhe h und/oder der Winkel β der Kupplungsnasen, die Spannkraft, den Dehnungskoeffizient und/oder die Oberflächengüte der Kupplungslippen und/oder der Kupplungsnasen, wobei vorzugsweise die Kupplungslippen ohne eigene Spannung hergestellt sind und/oder der Mittenrauwert Ra < 0,6 µm, insbesondere für die Kupplungsnasen.

Die Erfindung liefert auch einen Außenspiegel für ein Kraftfahrzeug mit einer Verstellvorrichtung, die eine erfindungsgemäße Rutschkupplung umfasst.

Der Erfindung liegt die überraschende Erkenntnis zur Grunde, dass aufgrund des reinen Formschlusses zwischen den Kupplungselementen der zwei Kunststoffteile einer erfindungsgemäßen Rutschkupplung einfache Änderungen bspw. der Geometrie von Kupplungselementen bereits ein Anpassung an einen bestimmten Einsatzzweck, nämlich über eine Anpassung des vorgegebenen maximalen Drehmoments, bis zu dem die Kupplungselemente der beiden Kunststoffteile miteinander drehen, da sie aneinander angreifen, ermöglichen.

Weitere Merkmale und Vorteile der Erfindung ergeben sich aus der nachfolgenden Beschreibung von Ausführungsbeispielen anhand schematischer Zeichnungen. Dabei zeigt:
- Figur 1a: eine perspektivische Ansicht einer ersten Ausführungsform einer erfindungsgemäßen Rutschkupplung;
- Figur 1b: eine andere perspektivische Ansicht der ersten Ausführungsform von Fig. 1a;
- Figur 1c: eine Teilschnittansicht der ersten Ausführungsform von Fig. 1a;
- Fig. 1d: eine Schnittansicht eines Kopplungselements der ersten Ausführungsform von Fig. 1a;
- Figur 2a: eine perspektivische Ansicht einer zweiten Ausführungsform einer erfindungsgemäßen Rutschkupplung; und
- Figur 2b: eine Teilschnittansicht der zweiten Ausführungsform von Fig. 2a.

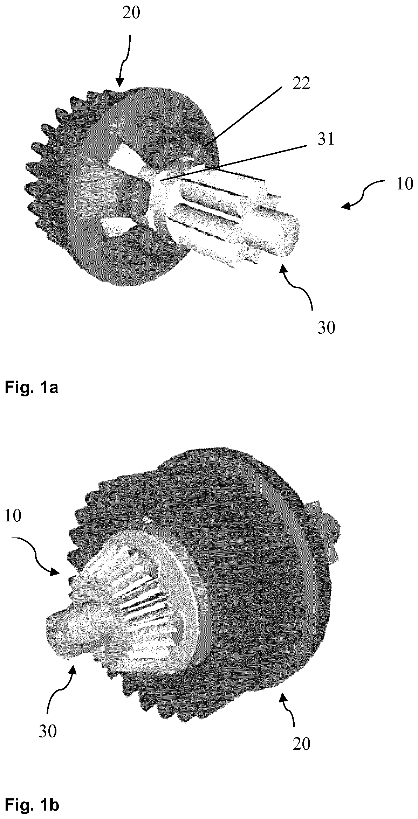

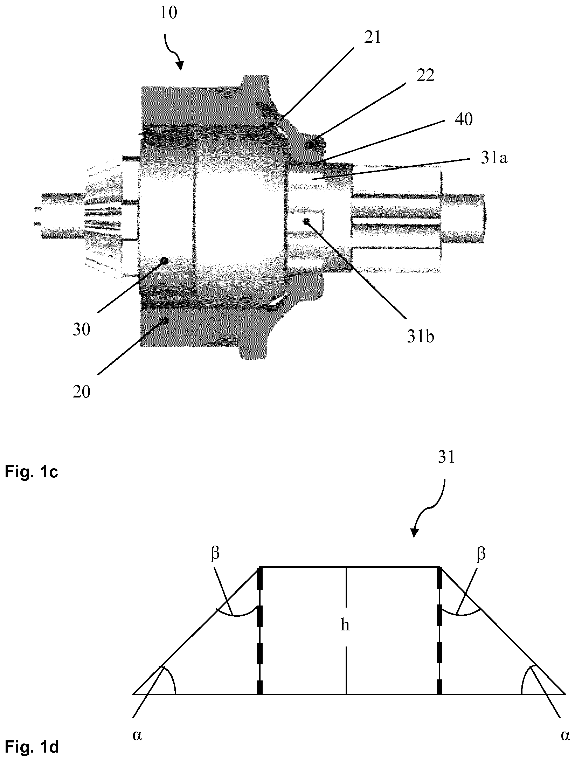

Die Figuren 1a bis 1d zeigen eine erste Ausführungsform einer erfindungsgemäßen Rutschkupplung 10, die in einer Verstellvorrichtung eines Außenspiegels eines Kraftfahrzeugs einsetzbar ist. Die Rutschkupplung 10 umfasst dabei zwei Kunststoffteile in Form eines äußeren Zahnrads 20 und einer inneren Welle 30. Die beiden Kunststoffteile sind vorzugsweise in einem 2-K-Spritzgussprozess hergestellt, und zwar derart, dass der Kunststoff des Zahnrads 20 eine höhere Elastizität als der Kunststoff der Welle 30 aufweist. Das Zahnrad 10 ist seinerseits mit sechs jeweils über einen Biegebereich 21 verbundenen Lippen 22 ausgeformt, während auf der Welle 30 Nasen 31 bereitgestellt sind, so dass in einer in Figur 1a dargestellten Grundstellung jede Lippe 22 zwischen zwei benachbarten Nasen 31 anliegt, und es zu einem formschlüssigen Ineinandergreifen der Lippen 22 und Nasen 31 kommt. In der Teilschnittansicht der Figur 1c ist zudem der Formschluss-Bereich 40 zwischen einer Lippe 22 und einer Nase 31a dargestellt.

Die Nasen 31 weisen, wie in Figur 1d dargestellt, jeweils die Form eines gleichschenkligen Trapez im Querschnitt auf, wobei über die Höhe h und die Nasenflanken-Winkel α, β das maximale Drehmoment, in dem ein Eingriff der Lippen 22 und der Nasen 31 vorliegt, bestimmt wird. Wird dieses maximale Drehmoment überschritten, rutschen die Lippen 22 über die Nasen 31 hinweg, so dass ein Eingriff verloren geht. Dieses "Hinwegrutschen" wird über den Biegebereich 21 zu jeder Lippe 22 ermöglicht.

Der Mittenrauwert Ra der Oberflächen der beiden Kunststoffteile kann > 0,6 µm sein, also durch ein Polieren erhalten werden, um Haftreibung zwischen den beiden Kunststoffteilen im Wesentlichen zu vermeiden. Ferner wird bei der Herstellung des Zahnrads 20 samt Biegebereichen 21 und Lippen 22 eine eigene Spannung in den Lippen 22 vermieden, so dass Kriechmomente zu vernachlässigen sind.

Es kommt also erfindungsgemäß zur Einstellung eines maximalen Drehmoments, bis zu dem die beiden Kunststoffteile miteinander drehen, im Wesentlichen auf die Bemaßung der Nasen 31 sowie auch der Elastizität der Biegebereiche 21 an.

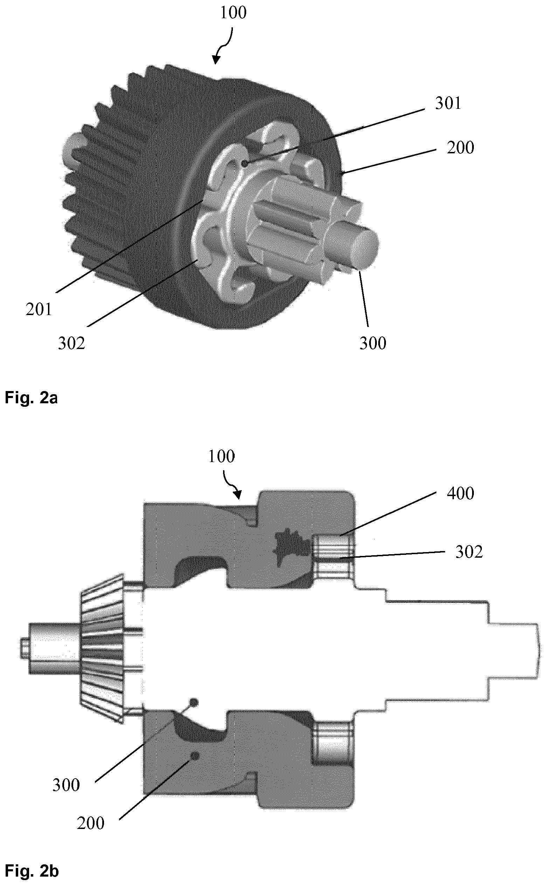

In den Figuren 2a und 2b ist eine zweite Ausführungsform einer erfindungsgemäßen Rutschkupplung 100 dargestellt. Diese Rutschkupplung 100 umfasst wieder zwei Kunststoffteile in Form eines äußeren Zahnrads 200 und einer inneren Welle 300. Im Unterschied zu der Ausführungsform der Figuren 1a bis 1d umfasst bei der zweiten Ausführungsform das Zahnrad 200 Nasen 201, während die Welle 300 mit Biegebereichen 301 und Lippen 302 ausgeformt ist. Die Lippen 302 greifen wieder jeweils in einen Zwischenraum zwischen zwei benachbarten Nasen 201, so dass in der in Figur 2a dargestellten Grundstellung ein reiner Formschluss zwischen den Kupplungselementen in Form der Nasen 201 und Lippen 302 vorliegt. Der Formschluss-Bereich 400 ist in der Teilschnittansicht von Figur 2b angedeutet.

Die zweite Ausführungsform der Erfindung zeichnet sich durch die gleichen Vorteile wie die erste Ausführungsform aus, nämlich die einfache Anpassbarkeit des maximalen Drehmoments, bis zu dem die beiden Kunststoffteile miteinander drehen, über die Geometrie der Nasen 201, die wieder im Schnitt die Form eines gleichschenkligen Trapez aufweisen können.

Durch die einfache Anpassbarkeit der Rutschkupplung an vorgegebene maximale Drehmomente liegt eine hohe Flexibilität im Einsatzbereich der erfindungsgemäßen Rutschkupplungen vor.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 10: Rutschkupplung
- 20: Zahnrad
- 21: Biegebereich
- 22: Lippe
- 30: Welle
- 31, 31a, 31b: Nase
- 40: Formschluss-Bereich

- 100: Rutschkupplung
- 200: Zahnrad
- 201: Nase
- 300: Welle
- 301: Biegebereich
- 302: Lippe
- 400: Formschluss-Bereich

- h: Nasenhöhe
- α, β: Nasenflankenwinkel

## Patentansprüche

1. Rutschkupplung (10, 100) für eine Verstellvorrichtung eines Kraftfahrzeugaußenspiegels, umfassend zwei Kunststoffteile, von denen ein erstes Teil als ein äußeres Zahnrad (20, 200) mit einer ersten Vielzahl von ersten Kupplungselementen (22, 201) und das zweite Teil als eine innere Welle (30, 300) mit einer zweiten Vielzahl von zweiten Kupplungselementen (31, 31a, 31b, 302) ausgeformt ist, wobei die ersten Kupplungselemente (201) als Kupplungsnasen und die zweiten Kupplungselemente (302) als Kupplungslippen ausgebildet sind, oder die zweiten Kupplungselemente (31, 31a, 31b) als Kupplungsnasen und die ersten Kupplungselemente (22) als Kupplungslippen ausgebildet sind, wobei die beiden Kunststoffteile bis zu einem vorgegebenen maximalen Drehmoment miteinander drehen, und wobei zwischen den ersten und zweiten Kupplungselementen (22, 201, 31, 31a, 31b, 302) bis zu dem vorgegebenen maximalen Drehmoment ein Formschluss besteht, **dadurch gekennzeichnet, dass**
das Kunststoffteil mit den Kupplungslippen (22, 302) aus einem Kunststoff mit höherer Elastizität als das Kunststoffteil mit den Kupplungsnasen (31, 31a, 31b, 201) hergestellt ist.

2. Rutschkupplung nach Anspruch 1, **dadurch gekennzeichnet, dass** 4 - 50 erste und/oder zweite Kupplungselemente (22, 201, 31, 31a, 31b, 302) vorgesehen sind.

3. Rutschkupplung nach Anspruch 2, **dadurch gekennzeichnet, dass** jede Kupplungslippe (22, 302) formschlüssig zwischen zwei benachbarten Kupplungsnasen (31, 31a, 31b, 201) anordbar ist, und/oder jede Kupplungslippe (22, 302) an einem freien Ende eines Biege- oder Federbereichs (21, 301) ausgeformt ist.

4. Rutschkupplung nach Anspruch 2 oder 3, **dadurch gekennzeichnet, dass** jede Kupplungsnase (31, 31a, 31b, 201) im Querschnitt die Form eines gleichschenkligen Trapezes einer Höhe h und eines Winkels β von weniger als 90 ° an seinem freien Ende aufweist.

5. Rutschkupplung nach einem der vorangehenden Ansprüche, **dadurch gekennzeichnet, dass**
die beiden Kunststoffteile entweder in einem Werkzeug, vorzugsweise in einem 2-K-Spritzgussprozess, hergestellt sind, oder
die Welle (30, 300) in das Zahnrad (20, 200) eingebaut ist.

6. Rutschkupplung nach einem der Ansprüche 2 bis 4, **dadurch gekennzeichnet, dass** das maximale Drehmoment bestimmt ist durch
die Geometrie der Kupplungslippen (22, 302) und/oder der Kupplungsnasen (31, 31a, 31b, 201), insbesondere die Höhe h und/oder der Winkel β der Kupplungsnasen (31, 31a, 31b, 201),
die Spannkraft, den Dehnungskoeffizient und/oder die Oberflächengüte der Kupplungslippen (22, 302) und/oder der Kupplungsnasen (31, 31a, 31b, 201), wobei vorzugsweise die Kupplungslippen (22, 302) ohne eigene Spannung hergestellt sind und/oder der Mittenrauwert Ra < 0,6 µm, insbesondere für die Kupplungsnasen (31, 31a, 31b, 201).

7. Außenspiegel für ein Kraftfahrzeug mit einer Verstellvorrichtung, die eine Rutschkupplung nach einem der vorangehenden Ansprüche umfasst.

## Claims

1. A friction clutch (10, 100) for an adjustment device of an external rearview mirror of a motor vehicle, comprising two plastic parts, a first part of which is formed as an external gear wheel (20, 200) having a first plurality of first coupling elements (22, 201) and the second part is formed as an internal shaft (30, 300) having a second plurality of second coupling elements (31, 31a, 31b, 302), wherein the first coupling elements (201) are designed as coupling lugs and the second coupling elements (302) are designed as coupling lips, or the second coupling elements (31, 31a, 31b) are designed as coupling lugs and the first coupling elements (22) are designed as coupling lips, wherein the two plastic parts rotate with one another up to a predefined maximum torque, and wherein between the first and second coupling elements (22, 201, 31, 31a, 31b, 302) up to the predefined maximum torque is a positive fit, **characterized in that** the plastic part having the coupling lips (22, 302) is made of a plastic material having higher elasticity than the plastic part having the coupling lugs (31, 31a, 31b, 201).

2. The friction clutch according to claim 1, **characterized in that** 4 - 50 first and/or second coupling elements (22, 201, 31, 31a, 31b, 302) are provided.

3. The friction clutch according to claim 2, **characterized in that** each coupling lip (22, 302) can be arranged positively between two adjacent coupling lugs (31, 31a, 31b, 201), and/or each coupling lip (22, 302) is formed at a free end of a bending or spring area (21, 301).

4. The friction clutch according to claim 2 or 3, **characterized in that** each coupling lug (31, 31a, 31b, 201) has in cross section the shape of an isosceles trapezoid of a height h and an angle of less than 90° at its free end.

5. The friction clutch according to one of the preceding claims, **characterized in that** the two plastic parts are either produced in a tool, preferably in a 2K injection moulding process, or the shaft (30, 300) is built into the gear wheel (20, 200).

6. The friction clutch according to one of claims 2 to 4, **characterized in that** the maximum torque is determined by the geometry of the coupling lips (22, 302) and/or the coupling lugs (31, 31a, 31b, 201), in particular the height h and/or the angle β of the coupling lugs (31, 31a, 31b, 201), the tension, the expansion coefficient and/or the surface quality of the coupling lips (22, 302) and/or the coupling lugs (31, 31a, 31b, 201), wherein preferably the coupling lips (22, 302) are produced without inherent tension and/or the average roughness Ra < 0,6 µm, in particular for the coupling lugs (31, 31a, 31b, 201).

7. An external rearview mirror for a motor vehicle having an adjustment device which comprises a friction clutch according to one of the preceding claims.

## Revendications

1. Accouplement à friction (10, 100) pour un dispositif de réglage d'un rétroviseur extérieur de véhicule automobile, comprenant deux pièces en plastique dont une première pièce est formée comme une roue dentée extérieure (20, 200) avec une première pluralité de premiers éléments d'accouplement (22, 201) et la seconde pièce est formée comme un arbre intérieur (30, 300) avec une seconde pluralité de seconds éléments d'accouplement (31, 31a, 31b, 302),
dans lequel les premiers éléments d'accouplement (201) sont formés comme des pattes d'accouplement et les seconds éléments d'accouplement (302) sont formés comme des lèvres d'accouplement, ou les seconds éléments d'accouplement (31, 31a, 31b) sont formés comme des pattes d'accouplement et les premiers éléments d'accouplement (22) sont formés comme des lèvres d'accouplement,
dans lequel les deux pièces en plastique tournent ensemble jusqu'à un couple maximal prédéterminé,
et dans lequel une liaison par complémentarité de forme existe entre les premiers et seconds éléments d'accouplement (22, 201, 31, 31a, 31b, 302) jusqu'au couple maximal prédéterminé, **caractérisé en ce que**
la pièce en plastique avec les lèvres d'accouplement (22, 302) est fabriquée en un plastique ayant une élasticité plus élevée que la pièce en plastique avec les pattes d'accouplement (31, 31a, 31b, 201).

2. Accouplement à friction selon la revendication 1, **caractérisé en ce que** 4-50 premiers et/ou seconds éléments d'accouplement (22, 201, 31, 31a, 31b, 302) sont prévus.

3. Accouplement à friction selon la revendication 2, **caractérisé en ce que** chaque lèvre d'accouplement (22, 302) peut être disposée par complémentarité de forme entre deux pattes d'accouplement (31, 31a, 31b, 201) voisins et/ou chaque lèvre d'accouplement (22, 302) est formée à une extrémité libre d'une zone de courbure ou d'une zone de ressort (21, 301).

4. Accouplement à friction selon la revendication 2 ou 3, **caractérisé en ce que** chaque patte d'accouplement (31, 31a, 31b, 201) a en coupe transversale la forme d'un trapèze isocèle d'une hauteur h et d'un angle β inférieur à 90°, à son extrémité libre.

5. Accouplement à friction selon l'une des revendications précédentes, **caractérisé en ce que** les deux pièces en plastique sont soit fabriquées dans un outil, de préférence dans un procédé de moulage par injection 2K, ou l'arbre (30, 300) est monté dans la roue dentée (20, 200).

6. Accouplement à friction selon l'une des revendications 2 à 4, **caractérisé en ce que** le couple maximal est déterminé par
la géométrie des lèvres d'accouplement (22, 302) et/ou des pattes d'accouplement (31, 31a, 31b, 201), en particulier la hauteur h et/ou l'angle β des pattes d'accouplement (31, 31a, 31b, 201),
la force de serrage, le coefficient d'allongement et/ou la qualité de surface des lèvres d'accouplement (22, 302) et/ou des pattes d'accouplement (31, 31a, 31b, 201), dans lequel de préférence les lèvres d'accouplement (22, 302) sont fabriquées sans tension propre et/ou la rugosité moyenne Ra < 0,6 µm, en particulier pour les pattes d'accouplement (31, 31a, 31b, 201).

7. Rétroviseur extérieur pour un véhicule automobile avec un dispositif de réglage, lequel comprend un accouplement à friction selon l'une des revendications précédentes.
